# EUROPEAN PATENT APPLICATION

(11) **EP 4 468 802 A1**
(43) Date of publication of application: **27.11.2024**
(21) Application number: 23739948.0
(22) Date of filing: 09.01.2023
(51) Int. Cl.: H04W 72/04

(54) **DATA TRANSMISSION METHOD AND APPARATUS, AND STORAGE MEDIUM, TERMINAL DEVICE AND NETWORK DEVICE**

(30) Priority: 17.01.2022 CN 202210049562
(71) Applicant: Spreadtrum Semiconductor (Nanjing) Co., Ltd., Nanjing, Jiangsu 211899 (CN)
(72) Inventor: LEI, Zhenzhu, Shanghai 201203 (CN)
(74) Representative: Nordmeyer, Philipp Werner
(86) International application number: PCT/CN2023/071179
(87) International publication number: WO 2023/134606

(57) **Abstract**

A data transmission method and apparatus, and a storage medium, a terminal device and a network device. The data transmission method comprises: receiving first configuration information for configuring candidate frequency-domain resources, and transmitting data on a first frequency-domain resource according to the first configuration information and first sub-band information, wherein the first sub-band information is used for indicating one or more sub-bands; and when the first frequency-domain resource is an uplink frequency-domain resource, the first sub-band information is information of an available sub-band, and the candidate frequency-domain resources comprise all available uplink frequency-domain resources, or, when the first frequency-domain resource is a downlink frequency-domain resource, the first sub-band information is information of an unavailable sub-band or information of an available sub-band, and the candidate frequency-domain resources comprise all available downlink frequency-domain resources. By means of the technical solution of the present invention, resources for data transmission can be accurately determined, thereby avoiding resource waste.

## Description

### CROSS-REFERENCE TO RELATED APPLICATIONS

This application claims priority to Chinese Patent Application No. 202210049562.X, filed on January 17, 2022, and entitled "DATA TRANSMISSION METHOD AND APPARATUS, STORAGE MEDIUM, TERMINAL DEVICE AND NETWORK DEVICE", the entire disclosure of which is incorporated herein by reference.

### TECHNICAL FIELD

The present disclosure generally relates to communication technology field, and more particularly, to a data transmission method and apparatus, a storage medium, a terminal device and a network device.

### BACKGROUND

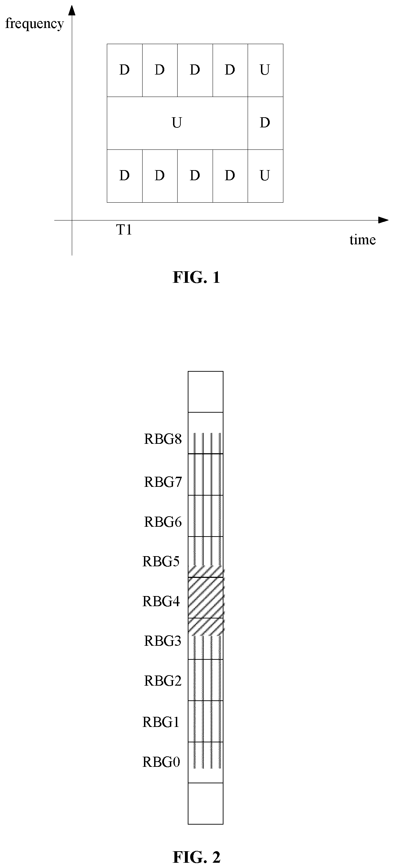

With rapid increasement of uplink service demand, higher requirements are placed on network uplink coverage, rate and latency. Compared with existing Time Division Duplex (TDD) systems that focus more on downlink transmission, full-duplex technology can simultaneously perform uplink and downlink transmissions at a same time, thereby providing opportunities for enhancement of uplink services. Referring to FIG. 1, sub-band full-duplex, as a special case of full-duplex, uses existence of sub-bands to divide uplink and downlink transmissions in a frequency domain. At a certain moment, U represents an uplink sub-band (i.e., a frequency domain resource for uplink transmission at that moment), and D represents a downlink sub-band (that is, a frequency domain resource for downlink transmission at that moment). While ensuring that uplink and downlink transmissions can be performed at the same time, sub-band full-duplex further reduces interference by using frequency division, reduces complexity of base stations, and is easier to implement.

In existing standards, configuration of frequency domain resources of multiple terminal devices is based on an entire Band Width Part (BWP), however, the sub-band full-duplex may divide the BWP into multiple sub-bands. The existing standard supports discontinuous frequency domain resource allocation for a terminal device, that is, indicating whether each Resource block groups (RBG) is allocated to the terminal device through a bitmap in granularity of RBG. The existing standard also supports continuous frequency domain resource allocation, that is, allocating a continuous section of frequency domain resources to the terminal device through a Resource Indication Value (RIV).

However, when the terminal device is configured with multiple discontinuous frequency domain resource blocks, and boundaries of the frequency domain resource blocks are not aligned with boundaries of the RBGs, resources across sub-band boundaries, i.e., the RBG that is partly located in a downlink sub-band and partly located in an uplink sub-band, cannot be allocated to the terminal device, resulting in resource waste. Especially in a case of large bandwidth, the RBG contains more resource block resources, and accordingly the waste of resources is greater.

### SUMMARY

Embodiments of the present disclosure provide a data transmission method and apparatus, which may accurately determine resources used for data transmission, thereby avoiding resource waste.

In a first aspect of the present disclosure, a data transmission method is provided, including: receiving first configuration information, wherein the first configuration information is used to configure candidate frequency domain resources; and transmitting data on a first frequency domain resource based on the first configuration information and first sub-band information; wherein the first sub-band information indicates one or more sub-bands; based on that the first frequency domain resource is an uplink frequency domain resource, the first sub-band information is available sub-band information, and the candidate frequency domain resources include all available uplink frequency domain resources; and based on that the first frequency domain resource is a downlink frequency domain resource, the first sub-band information is unavailable sub-band information or available sub-band information, and the candidate frequency domain resources include all available downlink frequency domain resources.

Optionally, the candidate frequency domain resources are continuous frequency domain resources, and the first configuration information is an RIV; or the candidate frequency domain resources include a plurality of frequency domain resource allocation units, and the first configuration information is a bitmap including a plurality of bits each of which corresponds to one of the plurality of frequency domain resource allocation units.

Optionally, the data transmission method further includes: receiving second configuration information, wherein the second configuration information is used to configure the first sub-band information.

Optionally, the first configuration information is carried in Downlink Control Information (DCI), and the second configuration information is carried in Radio Resource Control (RRC) signaling.

Optionally, the first frequency domain resource is the downlink frequency domain resource, the first sub-band information is the unavailable sub-band information, and the first sub-band information is carried in a rate matching related information element in RRC signaling.

Optionally, a field occupied by the first sub-band information is a field newly added in the rate matching related information element.

Optionally, based on that the first frequency domain resource is the uplink frequency domain resource, the first frequency domain resource is an overlapped part of the candidate frequency domain resources and the one or more sub-bands indicated by the first sub-band information.

Optionally, based on that the first frequency domain resource is the downlink frequency domain resource, in response to the first sub-band information being the unavailable sub-band information, the first frequency domain resource is a portion of the candidate frequency domain resources other than the one or more sub-bands indicated by the first sub-band information; or in response to the first sub-band information being the available sub-band information, the first frequency domain resource is a portion of the candidate frequency domain resources that overlaps with the one or more sub-bands indicated by the first sub-band information.

Optionally, based on that the first frequency domain resource is the portion of the candidate frequency domain resources other than the one or more sub-bands indicated by the first sub-band information, prior to said transmitting data on the first frequency domain resource based on the first configuration information and the first sub-band information, the method further includes: punching the candidate frequency domain resources using the one or more sub-bands indicated by the first sub-band information to acquire the first frequency domain resource.

In a second aspect of the present disclosure, a data transmission method is provided, including: transmitting first configuration information, wherein the first configuration information is used to configure candidate frequency domain resources; and transmitting data on a first frequency domain resource based on the first configuration information and first sub-band information; wherein the first sub-band information indicates one or more sub-bands; based on that the first frequency domain resource is an uplink frequency domain resource, the first sub-band information is available sub-band information, and the candidate frequency domain resources include all available uplink frequency domain resources; and based on that the first frequency domain resource is a downlink frequency domain resource, the first sub-band information is unavailable sub-band information or available sub-band information, and the candidate frequency domain resources include all available downlink frequency domain resources.

Optionally, the candidate frequency domain resources are continuous frequency domain resources, and the first configuration information is an RIV; or the candidate frequency domain resources include a plurality of frequency domain resource allocation units, and the first configuration information is a bitmap including a plurality of bits each of which corresponds to one of the plurality of frequency domain resource allocation units.

Optionally, the data transmission method further includes: transmitting second configuration information, wherein the second configuration information is used to configure the first sub-band information.

Optionally, the first configuration information is carried in DCI, and the second configuration information is carried in RRC signaling.

Optionally, the first frequency domain resource is the downlink frequency domain resource, the first sub-band information is the unavailable sub-band information, and the first sub-band information is carried in a rate matching related information element in RRC signaling.

Optionally, a field occupied by the first sub-band information is a field newly added in the rate matching related information element.

Optionally, based on that the first frequency domain resource is the uplink frequency domain resource, the first frequency domain resource is an overlapped part of the candidate frequency domain resources and the one or more sub-bands indicated by the first sub-band information.

Optionally, based on that the first frequency domain resource is the downlink frequency domain resource, in response to the first sub-band information being the unavailable sub-band information, the first frequency domain resource is a portion of the candidate frequency domain resources other than the one or more sub-bands indicated by the first sub-band information; or in response to the first sub-band information being the available sub-band information, the first frequency domain resource is a portion of the candidate frequency domain resources that overlaps with the one or more sub-bands indicated by the first sub-band information.

Optionally, based on that the first frequency domain resource is the portion of the candidate frequency domain resources other than the one or more sub-bands indicated by the first sub-band information, prior to said transmitting data on the first frequency domain resource based on the first configuration information and the first sub-band information, the method further includes: punching the candidate frequency domain resources using the one or more sub-bands indicated by the first sub-band information to acquire the first frequency domain resource.

In a third aspect of the present disclosure, a data transmission apparatus is provided, including a processing circuitry, and a transmitting and receiving circuitry; wherein the processing circuitry is configured to receive first configuration information via the transmitting and receiving circuitry, wherein the first configuration information is used to configure candidate frequency domain resources; and the processing circuitry is further configured to transmit data on a first frequency domain resource via the transmitting and receiving circuitry based on the first configuration information and first sub-band information; wherein the first sub-band information indicates one or more sub-bands; based on that the first frequency domain resource is an uplink frequency domain resource, the first sub-band information is available sub-band information, and the candidate frequency domain resources include all available uplink frequency domain resources; and based on that the first frequency domain resource is a downlink frequency domain resource, the first sub-band information is unavailable sub-band information or available sub-band information, and the candidate frequency domain resources include all available downlink frequency domain resources.

Optionally, the candidate frequency domain resources are continuous frequency domain resources, and the first configuration information is an RIV; or the candidate frequency domain resources include a plurality of frequency domain resource allocation units, and the first configuration information is a bitmap including a plurality of bits each of which corresponds to one of the plurality of frequency domain resource allocation units.

Optionally, the processing circuitry is further configured to: receive second configuration information via the transmitting and receiving circuitry, wherein the second configuration information is used to configure the first sub-band information.

Optionally, the first configuration information is carried in DCI, and the second configuration information is carried in RRC signaling.

Optionally, the first frequency domain resource is the downlink frequency domain resource, the first sub-band information is the unavailable sub-band information, and the first sub-band information is carried in a rate matching related information element in RRC signaling.

Optionally, a field occupied by the first sub-band information is a field newly added in the rate matching related information element.

Optionally, based on that the first frequency domain resource is the uplink frequency domain resource, the first frequency domain resource is an overlapped part of the candidate frequency domain resources and the one or more sub-bands indicated by the first sub-band information.

Optionally, based on that the first frequency domain resource is the downlink frequency domain resource, in response to the first sub-band information being the unavailable sub-band information, the first frequency domain resource is a portion of the candidate frequency domain resources other than the one or more sub-bands indicated by the first sub-band information; or in response to the first sub-band information being the available sub-band information, the first frequency domain resource is a portion of the candidate frequency domain resources that overlaps with the one or more sub-bands indicated by the first sub-band information.

Optionally, based on that the first frequency domain resource is the portion of the candidate frequency domain resources other than the one or more sub-bands indicated by the first sub-band information, prior to said transmitting data on the first frequency domain resource based on the first configuration information and the first sub-band information, the method further includes: punching the candidate frequency domain resources using the one or more sub-bands indicated by the first sub-band information to acquire the first frequency domain resource.

In a fourth aspect of the present disclosure, a data transmission apparatus is provided, including a processing circuitry, and a transmitting and receiving circuitry; wherein the processing circuitry is configured to transmit first configuration information via the transmitting and receiving circuitry, wherein the first configuration information is used to configure candidate frequency domain resources; and the processing circuitry is further configured to transmit data on a first frequency domain resource via the transmitting and receiving circuitry based on the first configuration information and first sub-band information; wherein the first sub-band information indicates one or more sub-bands; based on that the first frequency domain resource is an uplink frequency domain resource, the first sub-band information is available sub-band information, and the candidate frequency domain resources include all available uplink frequency domain resources; and based on that the first frequency domain resource is a downlink frequency domain resource, the first sub-band information is unavailable sub-band information or available sub-band information, and the candidate frequency domain resources include all available downlink frequency domain resources.

Optionally, the candidate frequency domain resources are continuous frequency domain resources, and the first configuration information is an RIV; or the candidate frequency domain resources include a plurality of frequency domain resource allocation units, and the first configuration information is a bitmap including a plurality of bits each of which corresponds to one of the plurality of frequency domain resource allocation units.

Optionally, the processing circuitry is further configured to: transmit second configuration information via the transmitting and receiving circuitry, wherein the second configuration information is used to configure the first sub-band information.

Optionally, the first configuration information is carried in DCI, and the second configuration information is carried in RRC signaling.

Optionally, the first frequency domain resource is the downlink frequency domain resource, the first sub-band information is the unavailable sub-band information, and the first sub-band information is carried in a rate matching related information element in RRC signaling.

Optionally, a field occupied by the first sub-band information is a field newly added in the rate matching related information element.

Optionally, based on that the first frequency domain resource is the uplink frequency domain resource, the first frequency domain resource is an overlapped part of the candidate frequency domain resources and the one or more sub-bands indicated by the first sub-band information.

Optionally, based on that the first frequency domain resource is the downlink frequency domain resource, in response to the first sub-band information being the unavailable sub-band information, the first frequency domain resource is a portion of the candidate frequency domain resources other than the one or more sub-bands indicated by the first sub-band information; or in response to the first sub-band information being the available sub-band information, the first frequency domain resource is a portion of the candidate frequency domain resources that overlaps with the one or more sub-bands indicated by the first sub-band information.

Optionally, based on that the first frequency domain resource is the portion of the candidate frequency domain resources other than the one or more sub-bands indicated by the first sub-band information, prior to said transmitting data on the first frequency domain resource based on the first configuration information and the first sub-band information, the method further includes: punching the candidate frequency domain resources using the one or more sub-bands indicated by the first sub-band information to acquire the first frequency domain resource.

In a fifth aspect of the present disclosure, a computer readable storage medium having computer instructions stored therein is provided, where when the computer instructions are executed by a processor, any one of the above methods provided in the first aspect or the second aspect is performed.

In a sixth aspect of the present disclosure, a terminal device which includes a memory and a processor is provided, where the memory has computer instructions stored therein, and when the processor executes the computer instructions, any one of the above methods provided in the first aspect or the second aspect is performed.

In a seventh aspect of the present disclosure, a network device which includes a memory and a processor is provided, where the memory has computer instructions stored therein, and when the processor executes the computer instructions, any one of the above methods provided in the first aspect or the second aspect is performed.

In an eighth aspect of the present disclosure, a computer program product having computer instructions stored therein is provided, where when the computer instructions are executed by a processor, any one of the above methods provided in the first aspect or the second aspect is performed.

In a ninth aspect of the present disclosure, a communication system which includes the above terminal device and the above network device is provided.

Embodiments of the present disclosure may provide following advantages.

In the embodiments of the present disclosure, the network device transmits the first configuration information, the terminal device receives the first configuration information, the first configuration information is used to configure the candidate frequency domain resources, and the candidate frequency domain resources include all available uplink frequency domain resources or all available downlink frequency domain resources. Through the first configuration information, the terminal device or the network device can learn the candidate frequency domain resources, and further determine the first frequency domain resource based on the first configuration information and the first sub-band information. Embodiments of the present disclosure may accurately determine a position of the first frequency domain resource, thereby avoiding resource waste.

Further, based on that the first frequency domain resource is the uplink frequency domain resource, the first frequency domain resource is an overlapped part of the candidate frequency domain resources and the one or more sub-bands indicated by the first sub-band information. As the candidate frequency domain resources include all the available uplink frequency domain resources which may include some unavailable resources, such as downlink resources or uplink resources allocated to other terminal devices, all effective uplink frequency domain resources, i.e., the first frequency domain resource, can be acquired by overlapping the candidate frequency domain resources with the available sub-bands, thereby avoiding resource waste.

Further, based on that the first frequency domain resource is the downlink frequency domain resource, in response to the first sub-band information being the unavailable sub-band information, the first frequency domain resource is a portion of the candidate frequency domain resources other than the one or more sub-bands indicated by the first sub-band information, and the candidate frequency domain resources are punched using the one or more sub-bands indicated by the first sub-band information to acquire the first frequency domain resource. As the candidate frequency domain resources include all available downlink frequency domain resources which may include some unavailable resources, such as uplink resources or downlink resources allocated to other terminal devices, all effective uplink frequency domain resources, i.e., the first frequency domain resource, can be acquired by punching the unavailable resources in combination with the unavailable sub-band information, thereby avoiding resource waste.

### BRIEF DESCRIPTION OF THE DRAWINGS

FIG. 1 is a schematic diagram of a full-duplex sub-band in existing techniques;
FIG. 2 is a schematic diagram of frequency domain resources configured in the existing techniques;
FIG. 3 is a flow chart of a data transmission method according to an embodiment;
FIG. 4 is a flow chart of a data transmission method according to an embodiment;
FIG. 5 is a schematic diagram of an application scenario according to an embodiment;
FIG. 6 is a schematic diagram of an application scenario according to an embodiment;
FIG. 7 is a schematic diagram of an application scenario according to an embodiment;
FIG. 8 is a schematic diagram of an application scenario according to an embodiment;
FIG. 9 is a block diagram of a data transmission apparatus according to an embodiment;
FIG. 10 is a block diagram of a data transmission apparatus according to an embodiment; and
FIG. 11 is a diagram of hardware structures of a data transmission apparatus according to an embodiment.

### DETAILED DESCRIPTION

Communication systems applicable to embodiments of the present disclosure include but are not limited to Long Term Evolution (LTE) systems, 5th-generation (5G) systems, New Radio (NR) systems, and future evolution systems or a fusion system of various communications. The 5G system may be a non-standalone (NSA) 5G system or a standalone (SA) 5G system. The technical solutions of the present disclosure also may be applied to different network architectures, including but not limited to a relay network architecture, a dual-link architecture, and a vehicle-to-everything architecture.

The present disclosure mainly relates to communication between a terminal device and a network device.

The network device in the embodiments of the present disclosure may also be referred to as an access network device, such as a base station (also called a base station equipment), and is a device deployed in a Radio Access Network (RAN) to provide radio communication functions. For example, an equipment that provides a base station function in a 2G network includes a Base Transceiver Station (BTS) and a Base Station Controller (BSC). An equipment that provides the base station function in a 3G network includes a Node B. An equipment that provides the base station function in a 4G network includes an evolved Node B (eNB). In a Wireless Local Area Network (WLAN), an equipment that provides the base station function is an Access Point (AP). An equipment that provides the base station function in a 5G New Radio (NR) includes gNB and a continuously evolved Node B (ng-eNB), where gNB and the terminal use NR technology for communication, ng-eNB and the terminal use Evolved Universal Terrestrial Radio Access (E-UTRA) technology for communication, and both gNB and ng-eNB can be connected to a 5G core network. And the base station also refers to an equipment that provides the base station function in a new communication system in the future.

The terminal device in the embodiments of the present disclosure may refer to various forms of access terminal, user unit, user station, Mobile Station (MS), remote station, remote terminal, mobile equipment, user terminal, wireless communication equipment, user agent or user device. The terminal device may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure. The terminal device may also be referred to as a UE or a terminal.

In existing standards, frequency domain resources shared by multiple terminal devices are configured based on an entire BWP, while sub-band full-duplex may divide the BWP into multiple sub-bands. A sub-band is an uplink sub-band in one time period (for example, one or more subframes, one or more slots, one or more mini slots, one or more Orthogonal Frequency Division Multiplexing (OFDM) symbols, etc.), and may be a downlink sub-band in another time period, and vice versa. This can be understood specifically from FIG. 1. In other words, sub-bands are not actually classified into uplink and downlink sub-bands. When a sub-band is used for uplink transmission, it can be called an uplink sub-band, and when a sub-band is used for downlink reception, it can be called a downlink sub-band. As multiple sub-bands are shared by multiple terminal devices, specific resources used by a terminal device for data transmission need to be further indicated through DCI.

When uplink and downlink frequency domain resources are allocated through DCI, there are two specific manners, being type0 and type1. Type0 supports continuous or non-continuous resource allocation, where different RBG sizes are selected according to bandwidth of different BWPs, each RBG includes multiple Resource Blocks (RBs), and then RBG is used as the granularity to indicate which RBGs are allocated to the terminal device in the form of bitmap in the DCI. Type1 only supports continuous frequency domain resource allocation, where a starting position and length of the allocated frequency domain resources are notified to the terminal device through joint coding in the form of RIV in the DCI. As shown in FIG. 1, in BWP, for the frequency domain resources at a time point T1, the sub-band used for uplink transmission belongs to non-continuous frequency domain resources which can only be allocated to the terminal device in the form of type0.

As described in the background, when the terminal device is configured with multiple discontinuous frequency domain resource blocks, and boundaries of the frequency domain resource blocks are not aligned with boundaries of the RBGs, resources across sub-band boundaries, i.e., the RBG that is partly located in a downlink sub-band and partly located in an uplink sub-band, cannot be allocated to the terminal device, resulting in resource waste.

Referring to FIG. 2, assuming that the sub-band full-duplex divides an entire BWP into three sub-bands. An uplink sub-band (shown as an oblique shaded part in FIG. 2) is in the middle of the BWP, and two downlink sub-bands (shown as a vertical shaded part in FIG. 2) are at both ends of the entire BWP, and boundaries of the uplink and downlink sub-bands are not aligned with an RBG. If a network device wants to allocate two frequency domain resource blocks for downlink transmission to a same terminal device, the network device can only use the type0 frequency domain resource allocation manner to set the 9-bit bitmap to 111000111 in the DCI to allocate RBG0-RBG2 and RBG6-RBG8 to the terminal device. However, downlink frequency domain resources in RBG3 and RBG5 cannot be allocated to the terminal device, resulting in a waste of frequency domain resources.

In order to make the above-mentioned objects, features and advantages of the present disclosure more obvious and easier to understand, specific embodiments of the present disclosure are described in detail below in conjunction with accompanying drawings.

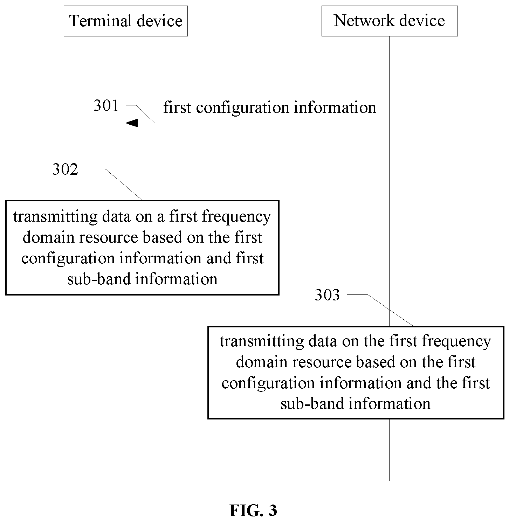

FIG. 3 is a flow chart of a data transmission method according to an embodiment. Referring to FIG. 3, the method includes 301, 302 and 303.

In 301, a network device transmits receiving first configuration information, where the first configuration information is used to configure candidate frequency domain resources. Accordingly, a terminal device receives the first configuration information.

Actions performed by the network device may be performed by the network device or by a chip or chip module in the network device. Actions performed by the terminal device may be performed by the terminal device or by a chip or chip module in the terminal device.

Optionally, the first configuration information may be carried in DCI.

The candidate frequency domain resources may be used to determine downlink transmission resources or uplink transmission resources. The candidate frequency domain resources may have following two situations.

In a first situation, the candidate frequency domain resources include multiple frequency domain resource allocation units.

In the first situation, the first configuration information is a bitmap including a plurality of bits each of which corresponds to one frequency domain resource allocation unit. In this case, the frequency domain resource allocation unit may be an RBG.

In the first situation, the candidate frequency domain resources in the embodiment are non-continuous resources, and may be indicated in a type0 manner. Specifically, the DCI indicates which RBGs are allocated to the terminal device in a bitmap manner.

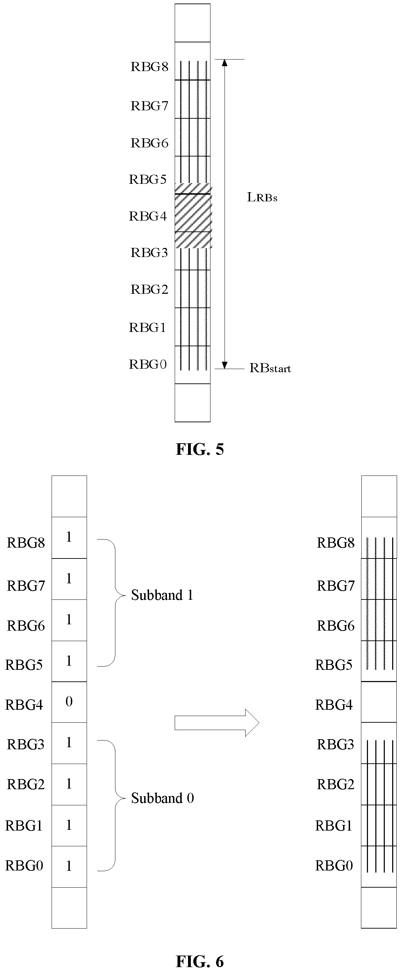

Referring to FIG. 5, assuming that the candidate frequency domain resources are used to determine the downlink transmission resources, the candidate frequency domain resources include RBG0 to RBG3 and RBG5 to RBG8. When the frequency domain resources are allocated in the type0 manner, the first configuration information of the 9-bit bitmap is set to 111101111 in DCI1_1. That is, when an RBG includes both downlink available resources and unavailable resources, a corresponding bit of the RBG in the bitmap is 1, that is, the RBG is also indicated to the terminal device through DCI.

In a second situation, the candidate frequency domain resources are continuous frequency domain resources. In this case, the frequency domain resource allocation unit may be an RB.

In the second situation, the first configuration information is an RIV which is acquired by jointly encoding a starting RB position and RB length of the continuous frequency domain resource. It should be noted that a specific method of joint encoding using the starting RB position and RB length of the frequency domain resources to acquire the RIV may be referred to the existing standards, which is not limited in the embodiments of the present disclosure.

In the second situation, the candidate frequency domain resources in the embodiment are continuous resources, which may be indicated in the type1 manner. Type1 supports continuous frequency domain resource allocation, and notifies the terminal device of the starting RB position and RB length of the allocated frequency domain resources in the RIV through joint coding.

In the second situation, referring to FIG. 5, assuming that the candidate frequency domain resources are used to determine downlink transmission resources, the candidate frequency domain resources include a continuous section of frequency domain resource, with RBₛₜₐᵣₜ as the starting RB position and L_{RBs} as the RB length, that is, L_{RBs} represents a number of RBs. The candidate frequency domain resources include the downlink available resources allocated to the terminal device and an unavailable resource sub-band, that is, the candidate frequency domain resources include an uplink sub-band shown in an oblique shaded portion in addition to a downlink sub-band shown in a vertical line portion in FIG. 5.

In 302, the terminal device transmits data on a first frequency domain resource based on the first configuration information and first sub-band information.

The first sub-band information indicates one or more sub-bands. Based on that the first frequency domain resource is an uplink frequency domain resource, the first sub-band information is available sub-band information, and the candidate frequency domain resources include all available uplink frequency domain resources. Based on that the first frequency domain resource is a downlink frequency domain resource, the first sub-band information is unavailable sub-band information or available sub-band information, and the candidate frequency domain resources include all available downlink frequency domain resources.

Specifically, when the first frequency domain resource is the uplink frequency domain resource, the candidate frequency domain resources include frequency domain resource allocation units where the uplink frequency domain resource is located; and when the first frequency domain resource is the downlink frequency domain resource, the candidate frequency domain resources include frequency domain resource allocation units where the downlink frequency domain resource is located. In 303, the network device transmits data on the first frequency domain resource based on the first configuration information and the first sub-band information.

In 302 and 303, if the data is uplink data, the terminal device transmits the data on the first frequency domain resource, and the network device receives the data on the first frequency domain resource. If the data is downlink data, the network device transmits the data on the first frequency domain resource, and the terminal device receives the data on the first frequency domain resource.

In some embodiments, the first sub-band information is used to indicate a frequency domain position of one or more sub-bands, and the frequency domain position may be represented by RB, for example, the position of the sub-band is determined by an index of RB. For downlink transmission, the first sub-band information is unavailable sub-band information or available sub-band information, the available sub-band may be a downlink sub-band, and the unavailable sub-band may be an uplink sub-band or a resource allocated to other terminal devices. For uplink transmission, the first sub-band information is available sub-band information, and the available sub-band may be an uplink sub-band.

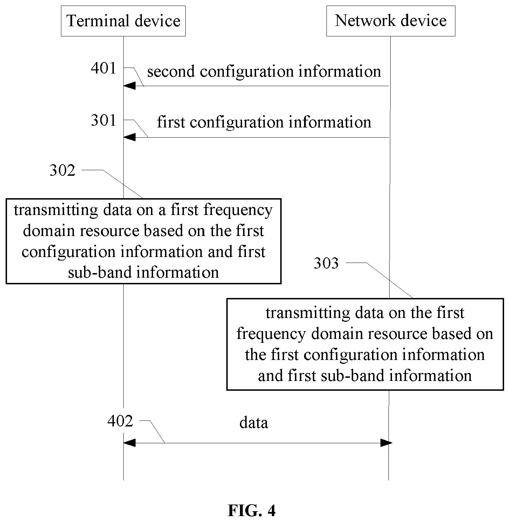

In some embodiments, referring to FIG. 4, in 401, the network device may transmit second configuration information to the terminal device. Accordingly, the terminal device receives the second configuration information. The second configuration information is used to configure the first sub-band information. The first sub-band information may be used to determine a position of the first sub-band. The first sub-band information may be, for example, an identity of the sub-band or information of RBs included in the sub-band (for example, an RB index, and for example, a starting RB index and an RB length). The first sub-band information may also include a type of the sub-band (such as an available sub-band or an unavailable sub-band), etc.

For example, the second configuration information includes identity 0 of sub-band 0, identity 1 of sub-band 1, and identity 2 of sub-band 2. The type of sub-band 0 is an available sub-band, the type of sub-band 1 is an available sub-band, and the type of sub-band 2 is an unavailable sub-band.

Specifically, the second configuration information may be carried in RRC signaling.

In the embodiments, the terminal device or the network device may determine the first frequency domain resource based on the first configuration information and the first sub-band information, and transmit data on the first frequency domain resource. In different situations, the process of determining the first frequency domain resource is different. The process of determining the first frequency domain resource in a first situation (the first frequency domain resource is a downlink frequency domain resource) and a second situation (the first frequency domain resource is an uplink frequency domain resource) is exemplarily described below.

In the first situation, the first frequency domain resource is a downlink frequency domain resource.

In the first situation, the first frequency domain resource may be determined by a following manner 1 or manner 2.

In manner 1, if the first sub-band information is available sub-band information, the first frequency domain resource is an overlapped portion of the candidate frequency domain resources and the one or more sub-bands indicated by the first sub-band information.

Exemplarily, referring to FIG. 6, 'resourceAllocation' in 'PDSCH-Config' in RRC signaling is configured as resourceAllocationType0, that is, type0 frequency domain resource allocation. Based on a 9-bit bitmap "111101111" in a frequency domain resource assignment field in DCI1_1, it is determined that the candidate frequency domain resources assigned to the terminal device are RBG0 to RBG3 and RBG5 to RBG8. As downlink frequency domain resources are allocated in DCI1_1, the allocated resources are effective merely in downlink sub-bands. Further based on that available sub-band resource positions configured in the first sub-band information by RRC are sub-band 0 and sub-band 1, an overlapped part of the candidate frequency domain resources, sub-band 0 and sub-band 1 is used as final effective resources (the first frequency domain resource) in the downlink sub-bands, as shown in a vertical line shaded part in FIG. 6.

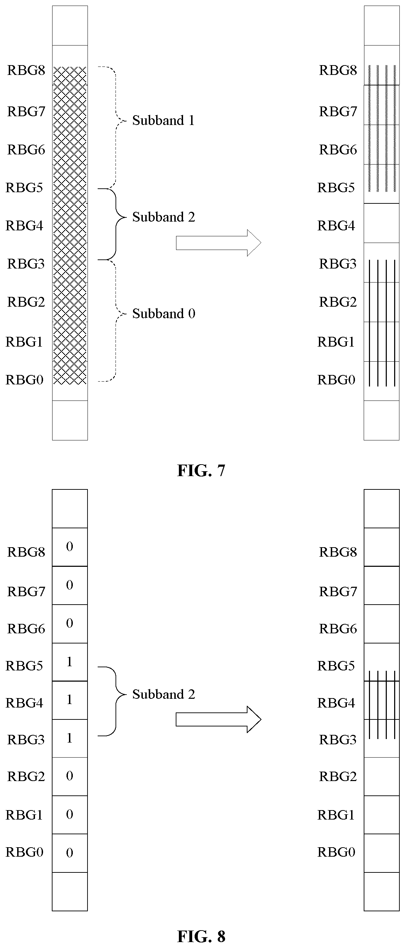

Exemplarily, referring to FIG. 7, 'resourceAllocation' in 'PDSCH-Config' in the RRC signaling is configured as resourceAllocationType1, that is, type1 frequency domain resource allocation. Based on that the frequency domain resource assignment field in DCI1_0 or DCI1_1 is set to a jointly coding value RIV, it is determined that the frequency domain resources allocated to the terminal device are shown in a diamond shaded part on the left side in FIG. 7, that is, the candidate frequency domain resources are frequency domain resources starting from RBₛₜₐᵣₜ and having a length of L_{RBs} RBs. As downlink frequency domain resources are allocated in DCI1_0 or DCI1_1, the allocated resources are effective merely in the available sub-bands. Further based on that resource positions of the available sub-bands configured by RRC are sub-band 0 and sub-band 1, final effective resources (the first frequency domain resources) in the downlink sub-bands are acquired, as shown in a vertical line shaded part in FIG. 7.

In manner 2, the first sub-band information is unavailable sub-band information, and the first frequency domain resource is a portion of the candidate frequency domain resources other than the one or more sub-bands indicated by the first sub-band information.

In the manner 2, the first sub-band information is carried in a rate matching related information element in RRC signaling. A field occupied by the first sub-band information may be a newly added field in the rate matching related information element. Specifically, a field 'Sub-band' may be added to a parameter 'patternType' in an RRC related information element IE RateMatchPattern to indicate a sub-band identity of punching, i.e., the first sub-band information. A specific position of each sub-band may be indicated by other signaling or other information elements in the RRC signaling. Therefore, the specific position of the frequency domain resources that need to be punched may be determined based on the first sub-band information and the specific positions of the sub-bands indicated by other information elements.

In the manner 1, before the terminal device and the network device transmit data on the first frequency domain resource based on the first configuration information and the first sub-band information, the method further includes: the terminal device and the network device using the one or more sub-bands indicated by the first sub-band information to punch the candidate frequency domain resources to acquire the first frequency domain resource.

Exemplarily, referring to FIG. 7, a field 'Sub-band' is added to `patternType' in IE RateMatchPattern in RRC signaling to indicate punching sub-band information (i.e., the first sub-band information). In DCI1_0, the candidate frequency domain resources are acquired by the type1 resource allocation method, as shown in the diamond shaded portion on the left side in FIG. 7. If 'Sub-band' in 'RateMatchPattern' in `rateMatchPatternToAddModList' in a PDSCH configuration information element (i.e., PDSCH Config) in the RRC signaling is set to SubbandID of the unavailable sub-band (i.e., sub-band 2), the unavailable sub-band frequency domain resources in the candidate frequency domain resources are punched to acquire final effective resources (the first frequency domain resources) in the downlink sub-bands, as shown in the vertical line shaded portion in FIG. 7.

In the manner 1, indication information may be added to DCI, where the indication information is used to indicate that the candidate frequency domain resources are punched using the one or more sub-bands indicated by the first sub-band information, or to indicate whether the candidate frequency domain resources are punched using the one or more sub-bands indicated by the first sub-band information. The indication information may be carried in a dummy parameter, for example, when the dummy parameter is set to semi-static, it indicates that the candidate frequency domain resources are punched using the one or more sub-bands indicated by the first sub-band information, and when the dummy parameter is set to dynamic, it indicates that the DCI needs to dynamically indicate whether the candidate frequency domain resources are punched using the one or more sub-bands indicated by the first sub-band information.

Exemplarily, in DCI1_1, the candidate frequency domain resources are acquired through type0 or type1 resource allocation, as shown in the diamond shaded portion on the left side in FIG. 7. When 'Sub-band' in 'RateMatchPattern' in `rateMatchPatternToAddModList' in PDSCH-Config is set to Sub-bandID of the unavailable sub-band (that is, sub-band 2), and the dummy parameter is set to semi-static, the unavailable sub-band frequency domain resources of the candidate frequency domain resources are directly punched to acquire final effective resources (the first frequency domain resource) in the downlink sub-bands, as shown in the vertical line shaded portion in FIG. 7.

Alternatively, in DCI1_1, the candidate frequency domain resources are acquired through type0 or type1 resource allocation. 'Sub-band' in `RateMatchPattern' in `rateMatchPatternToAddModList' in 'PDSCH-Config' is set to the Sub-bandID of the uplink sub-band (i.e., sub-band 2), the dummy parameter is set to dynamic, and 'RateMatchPatternID' which is configured with a sub-band is added to 'rateMatchPatternGroup1' or `rateMatchPatternGroup2' in `PDSCH-Config'. In this way, it is possible to dynamically indicate whether to punch the sub-band through a matching indicator field in DCI1_1. If the rate matching indicator field in DCI1_1 is set to 1, it means that the uplink sub-band is punched, and the final effective resources (the first frequency domain resource) in the downlink sub-bands can be acquired, as shown in the vertical line shaded part in FIG. 7. If the rate matching indicator field in DCI1_1 is set to 0, it means that the uplink sub-band is not punched.

Specifically, `rateMatchPattern' not included in `rateMatchPatternGroup 1' and `rateMatchPatternGroup2' belongs to a static rate matching mode, that is, it contains Resource Elements (REs) that are not available for PDSCH, corresponding to semi-static rate matching. `rateMatchPattern' included in `rateMatchPatternGroup 1' and `rateMatchPatternGroup2' belongs to a dynamically configured rate matching mode, where whether REs can be used for PDSCH is dynamically indicated by DCI, corresponding to dynamic rate matching.

In the second situation, the first frequency domain resource is an uplink frequency domain resource.

In the second situation, the first frequency domain resource is an overlapped portion of the candidate frequency domain resources and the one or more sub-bands indicated by the first sub-band information.

In the second situation, the first frequency domain resource can be determined only through the overlapped part of the candidate frequency domain resources and the uplink sub-bands, but cannot be determined by rate matching.

Exemplarily, 'resourceAllocation' in 'PDSCH-Config' in RRC signaling is configured as resourceAllocationType0, i.e., type0 frequency domain resource allocation. Through a 9-bit bitmap "000111000" in a Frequency domain resource assignment field in DCI0_1, it is determined that the candidate frequency domain resources allocated to the terminal device are RBG3 to RBG5. As the uplink frequency domain resources are allocated in DCI0_1, the allocated resources are effective merely in the uplink sub-bands. Further based on that an available sub-band resource position of the first sub-band information configured by RRC is sub-band 2, the overlapped part of the candidate frequency domain resources and sub-band 2 is used as final effective resources (the first frequency domain resource) in the uplink sub-bands, as shown in a vertical line shaded part in FIG. 8. The embodiments of the present disclosure provide a frequency domain resource allocation method suitable for sub-band full-duplex. By associating the sub-band information in the BWP in the frequency domain resource configuration or rate matching, all frequency domain resources in the sub-bands can be configured to reduce resource waste. For example, referring to FIG. 6, based on existing resource allocation methods, the downlink frequency domain resources in RBG3 and RBG5 cannot be allocated to the terminal device. However, in the embodiments of the present disclosure, the downlink frequency domain resources in RBG3 and RBG5 can be allocated to the terminal device, thereby avoiding resource waste.

It should be noted that sequence numbers of steps in the embodiments do not represent a limitation on an execution order of the steps.

It could be understood that in specific implementation, the data transmission method may be implemented in a form of software program which runs in a processor integrated within a chip or chip module. Alternatively, the method may be implemented using a combination of software and hardware, which is not limited in the present disclosure.

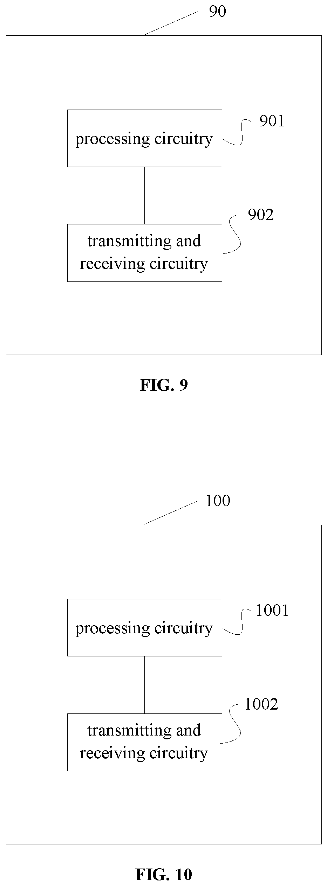

Referring to FIG. 9, FIG. 9 is a block diagram of a data transmission apparatus 90 according to an embodiment. The data transmission apparatus 90 includes: a processing circuitry 901 and a transmitting and receiving circuitry 902.

The processing circuitry 901 is configured to receive first configuration information via the transmitting and receiving circuitry 902, wherein the first configuration information is used to configure candidate frequency domain resources.

The processing circuitry 901 is further configured to transmit data on a first frequency domain resource via the transmitting and receiving circuitry 902 based on the first configuration information and first sub-band information; wherein the first sub-band information indicates one or more sub-bands; based on that the first frequency domain resource is an uplink frequency domain resource, the first sub-band information is available sub-band information, and the candidate frequency domain resources include all available uplink frequency domain resources; and based on that the first frequency domain resource is a downlink frequency domain resource, the first sub-band information is unavailable sub-band information or available sub-band information, and the candidate frequency domain resources include all available downlink frequency domain resources.

In some embodiments, the data transmission apparatus 90 may correspond to a chip with a data transmission function in a terminal device, such as a System-On-Chip (SOC) or a baseband chip, or to a chip module including a chip with a data transmission function in the terminal device, or to a chip module including a chip with a data processing function, or to the terminal device.

Referring to FIG. 10, FIG. 10 is a block diagram of a data transmission apparatus 100 according to an embodiment. The data transmission apparatus 100 includes: a processing circuitry 1001 and a transmitting and receiving circuitry 1002.

The processing circuitry 1001 is configured to transmit first configuration information via the transmitting and receiving circuitry 1002, wherein the first configuration information is used to configure candidate frequency domain resources.

The processing circuitry 1001 is further configured to transmit data on a first frequency domain resource via the transmitting and receiving circuitry 1002 based on the first configuration information and first sub-band information; wherein the first sub-band information indicates one or more sub-bands; based on that the first frequency domain resource is an uplink frequency domain resource, the first sub-band information is available sub-band information, and the candidate frequency domain resources include all available uplink frequency domain resources; and based on that the first frequency domain resource is a downlink frequency domain resource, the first sub-band information is unavailable sub-band information or available sub-band information, and the candidate frequency domain resources include all available downlink frequency domain resources.

In some embodiments, the data transmission apparatus 100 may correspond to a chip with a data transmission function in a network device, such as an SOC or a baseband chip, or to a chip module including a chip with a data transmission function in the network device, or to a chip module including a chip with a data processing function, or to the network device.

More details of working principles and working modes of the data transmission apparatus 90 or the data transmission apparatus 100 can be referred to related descriptions in FIG. 3 and FIG. 4, and are not repeated here.

Each module/unit of each apparatus and product described in the above embodiments may be a software module/unit or a hardware module/unit, or may be a software module/unit in part, and a hardware module/unit in part. For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

In an embodiment of the present disclosure, a computer readable storage medium having computer instructions stored therein is provided, where when the computer instructions are executed, any of the above data transmission methods is performed. In some embodiments, the storage medium may include a ROM, a RAM, a magnetic disk or an optical disk. In some embodiments, the storage medium may include a non-volatile or a non-transitory memory.

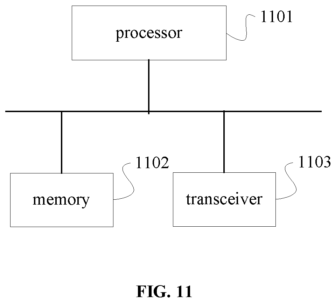

Referring to FIG. 11, FIG. 11 is a diagram of hardware structures of a communication apparatus according to an embodiment. The apparatus includes a processor 1101, a memory 1102 and a transceiver 1103.

The processor 1101 may be a general Central Processing Unit (CPU), a microprocessor, an Application-Specific Integrated Circuit (ASIC), or one or more integrated circuits used to control execution of a program of the present application. The processor 1101 may include multiple CPUs, and may be a single-CPU processor or a multi-CPU processor. The processor here may refer to one or more devices, circuits or processing cores for processing data (e.g., computer program instructions).

The memory 1102 may be ROM or other types of static storage devices that can store static information and instructions, RAM or other types of dynamic storage devices that can store information and instructions, Electrically Erasable Programmable Read-Only Memory (EEPROM), Compact Disc-Read Only Memory (CD-ROM) or other optical disc storage, optical disk storage (including compressed optical discs, laser discs, optical discs, digital versatile discs, Blu-ray discs, etc.), magnetic disk storage media or other magnetic storage devices, or any other medium that can be used to carry or store desired program codes in the form of instructions or data structures and can be accessed by a computer, which is not limited in the embodiments of the present disclosure. The memory 1102 may exist independently (in this case, the memory 1102 may be located outside the device or within the device), or may be integrated with the processor 1101. The memory 1102 may include computer program codes. The processor 1101 is used to execute the computer program codes stored in the memory 1102, thereby implementing the method provided in the embodiments of the present disclosure.

The processor 1101, the memory 1102 and the transceiver 1103 are coupled through a bus. The transceiver 1103 is used to communicate with other devices or communication networks. Optionally, the transceiver 1103 may include a transmitter and a receiver. A device used to implement a receiving function in the transceiver 1103 can be regarded as a receiver which is used to perform receiving steps in the embodiments of the present disclosure. A device used to implement a transmitting function in the transceiver 1103 can be regarded as a transmitter which is used to perform transmitting steps in the embodiments of the present disclosure.

When the diagram shown in FIG. 11 is used to illustrate a structure of the terminal device involved in the above embodiments, the processor 1101 is configured to control and manage actions of the terminal device. For example, the processor 1101 is configured to support the terminal device to perform 301 and 302 in FIG. 3, or 301, 401, 302 and 402 in FIG. 4, and/or actions performed by the terminal device in other procedures described in the embodiments of the present disclosure. The processor 1101 may communicate with other network entities through the transceiver 1103, for example, with the network device described above. The memory 1102 is configured to store program codes and data of the terminal device. When the processor runs the computer program, the transceiver 1103 is controlled to receive one or more of RRC signaling and DCI.

When the diagram shown in FIG. 11 is used to illustrate a structure of the network device involved in the above embodiments, the processor 1101 is configured to control and manage actions of the network device. For example, the processor 1101 is configured to support the network device to perform 301 and 303 in FIG. 3, or 401, 301, 303 and 402 in FIG. 4, and/or actions performed by the network device in other procedures described in the embodiments of the present disclosure. The processor 1101 may communicate with other network entities through the transceiver 1103, for example, with the terminal device described above. The memory 1102 is configured to store program codes and data of network devices. When the processor runs the computer program, the transceiver 1103 is controlled to transmit one or more of RRC signaling and DCI.

In the embodiments of the present disclosure, a unidirectional communication link from an access network to a terminal is defined as a downlink, data transmitted on the downlink is downlink data, and a transmission direction of the downlink data is called a downlink direction. Besides, a unidirectional communication link from a terminal to an access network is defined as an uplink, data transmitted on the uplink is uplink data, and a transmission direction of the uplink data is called an uplink direction.

It should be understood that the term "and/or" in the present disclosure is merely an association relationship describing associated objects, indicating that there can be three types of relationships, for example, A and/or B can represent three situations including "A exists only", "both A and B exist", and "B exists only". In addition, the character "/" in the present disclosure represents that the former and latter associated objects have an "or" relationship.

The "plurality" in the embodiments of the present disclosure refers to two or more.

The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

The "connection" in the embodiments of the present disclosure refers to various connection ways such as direct connection or indirect connection to realize communication between devices, which is not limited in the embodiments of the present disclosure.

The above embodiments may be implemented in whole or in part by software, hardware, firmware or any combination thereof. When implemented in software, the above embodiments may be implemented in whole or in part in the form of a computer program product. The computer program product includes one or more computer instructions or computer programs. The procedures or functions according to the embodiments of the present disclosure are wholly or partially generated when the computer instructions or the computer programs are loaded or executed on a computer. The computer may be a general-purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website, computer, server or data center to another website, computer, server or data center by wire or in a wireless manner. The computer readable storage medium may be any available medium that the computer can access, or a data storage device including a collection of one or more available media, such as a server or a data center.

It should be understood that, in the various embodiments of the present disclosure, sequence numbers of the above-mentioned processes do not represent an execution sequence, and the execution sequence of each process should be determined by its function and inherent logic, which does not limit an implementation process of the embodiments of the present disclosure.

In the above embodiments of the present disclosure, it should be understood that the disclosed method, device and system may be implemented in other ways. For example, the above device embodiments are merely illustrative, and for example, division of units is merely one logical division, and other divisions may be realized in practice, for example, a plurality of units or components may be combined or integrated into another system, or some features may be omitted, or not executed. Further, the shown or discussed mutual coupling or direct coupling or communication connection may be an indirect coupling or communication connection via some interfaces, devices or units, and may be in an electrical, mechanical or other form.

The units described as separate parts may or may not be physically separate, and parts shown as units may or may not be physical units, that is, may be disposed in one place, or may be distributed on a plurality of network units. Some or all of the units can be selected according to practical requirements to achieve the purpose of the solutions of the embodiments.

In addition, functional units in the embodiments of the present disclosure may be integrated in one processing unit, or each unit may be physically separate, or two or more units may be integrated in one unit. The integrated units can be realized in a form of hardware, or in a form of hardware plus a software functional unit.

The integrated units implemented in the form of the software functional unit may be stored in a computer readable storage medium. The software functional unit is stored in a storage medium and includes several instructions for causing a computer device (a personal computer, a server or a network device) to execute some steps of the methods in the embodiments of the present disclosure.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A data transmission method, **characterized by** comprising:
receiving first configuration information, wherein the first configuration information is used to configure candidate frequency domain resources; and
transmitting data on a first frequency domain resource based on the first configuration information and first sub-band information;
wherein the first sub-band information indicates one or more sub-bands;
based on that the first frequency domain resource is an uplink frequency domain resource, the first sub-band information is available sub-band information, and the candidate frequency domain resources comprise all available uplink frequency domain resources; and
based on that the first frequency domain resource is a downlink frequency domain resource, the first sub-band information is unavailable sub-band information or available sub-band information, and the candidate frequency domain resources comprise all available downlink frequency domain resources.

2. The data transmission method according to claim 1, **characterized in that** the candidate frequency domain resources are continuous frequency domain resources, and the first configuration information is a Resource Indication Value (RIV); or
the candidate frequency domain resources comprise a plurality of frequency domain resource allocation units, and the first configuration information is a bitmap comprising a plurality of bits each of which corresponds to one of the plurality of frequency domain resource allocation units.

3. The data transmission method according to claim 1 or 2, **characterized by** further comprising:
receiving second configuration information, wherein the second configuration information is used to configure the first sub-band information.

4. The data transmission method according to claim 3, **characterized in that** the first configuration information is carried in Downlink Control Information (DCI), and the second configuration information is carried in Radio Resource Control (RRC) signaling.

5. The data transmission method according to any one of claims 1 to 4, **characterized in that** the first frequency domain resource is the downlink frequency domain resource, the first sub-band information is the unavailable sub-band information, and the first sub-band information is carried in a rate matching related information element in RRC signaling.

6. The data transmission method according to claim 5, **characterized in that** a field occupied by the first sub-band information is a field newly added in the rate matching related information element.

7. The data transmission method according to any one of claims 1 to 6, **characterized in that** based on that the first frequency domain resource is the uplink frequency domain resource, the first frequency domain resource is an overlapped part of the candidate frequency domain resources and the one or more sub-bands indicated by the first sub-band information.

8. The data transmission method according to any one of claims 1 to 7, **characterized in that** based on that the first frequency domain resource is the downlink frequency domain resource, in response to the first sub-band information being the unavailable sub-band information, the first frequency domain resource is a portion of the candidate frequency domain resources other than the one or more sub-bands indicated by the first sub-band information; or in response to the first sub-band information being the available sub-band information, the first frequency domain resource is a portion of the candidate frequency domain resources that overlaps with the one or more sub-bands indicated by the first sub-band information.

9. The data transmission method according to claim 8, **characterized in that** based on that the first frequency domain resource is the portion of the candidate frequency domain resources other than the one or more sub-bands indicated by the first sub-band information, prior to said transmitting data on the first frequency domain resource based on the first configuration information and the first sub-band information, the method further comprises:
punching the candidate frequency domain resources using the one or more sub-bands indicated by the first sub-band information to acquire the first frequency domain resource.

10. A data transmission method, **characterized by** comprising:
transmitting first configuration information, wherein the first configuration information is used to configure candidate frequency domain resources; and
transmitting data on a first frequency domain resource based on the first configuration information and first sub-band information;
wherein the first sub-band information indicates one or more sub-bands;
based on that the first frequency domain resource is an uplink frequency domain resource, the first sub-band information is available sub-band information, and the candidate frequency domain resources comprise all available uplink frequency domain resources; and
based on that the first frequency domain resource is a downlink frequency domain resource, the first sub-band information is unavailable sub-band information or available sub-band information, and the candidate frequency domain resources comprise all available downlink frequency domain resources.

11. The data transmission method according to claim 10, **characterized in that** the candidate frequency domain resources are continuous frequency domain resources, and the first configuration information is a Resource Indication Value (RIV); or
the candidate frequency domain resources comprise a plurality of frequency domain resource allocation units, and the first configuration information is a bitmap comprising a plurality of bits each of which corresponds to one of the plurality of frequency domain resource allocation units.

12. The data transmission method according to claim 10 or 11, **characterized by** further comprising:
transmitting second configuration information, wherein the second configuration information is used to configure the first sub-band information.

13. The data transmission method according to claim 12, **characterized in that** the first configuration information is carried in Downlink Control Information (DCI), and the second configuration information is carried in Radio Resource Control (RRC) signaling.

14. The data transmission method according to any one of claims 10 to 13, **characterized in that** the first frequency domain resource is the downlink frequency domain resource, the first sub-band information is the unavailable sub-band information, and the first sub-band information is carried in a rate matching related information element in RRC signaling.

15. The data transmission method according to claim 14, **characterized in that** a field occupied by the first sub-band information is a field newly added in the rate matching related information element.

16. The data transmission method according to any one of claims 10 to 15, **characterized in that** based on that the first frequency domain resource is the uplink frequency domain resource, the first frequency domain resource is an overlapped part of the candidate frequency domain resources and the one or more sub-bands indicated by the first sub-band information.

17. The data transmission method according to any one of claims 10 to 16, **characterized in that** based on that the first frequency domain resource is the downlink frequency domain resource, in response to the first sub-band information being the unavailable sub-band information, the first frequency domain resource is a portion of the candidate frequency domain resources other than the one or more sub-bands indicated by the first sub-band information; or in response to the first sub-band information being the available sub-band information, the first frequency domain resource is a portion of the candidate frequency domain resources that overlaps with the one or more sub-bands indicated by the first sub-band information.

18. The data transmission method according to claim 17, **characterized in that** based on that the first frequency domain resource is the portion of the candidate frequency domain resources other than the one or more sub-bands indicated by the first sub-band information, prior to said transmitting data on the first frequency domain resource based on the first configuration information and the first sub-band information, the method further comprises:
punching the candidate frequency domain resources using the one or more sub-bands indicated by the first sub-band information to acquire the first frequency domain resource.

19. A data transmission apparatus, **characterized by** comprising a processing circuitry, and a transmitting and receiving circuitry;
wherein the processing circuitry is configured to receive first configuration information via the transmitting and receiving circuitry, wherein the first configuration information is used to configure candidate frequency domain resources; and
the processing circuitry is further configured to transmit data on a first frequency domain resource via the transmitting and receiving circuitry based on the first configuration information and first sub-band information;
wherein the first sub-band information indicates one or more sub-bands;
based on that the first frequency domain resource is an uplink frequency domain resource, the first sub-band information is available sub-band information, and the candidate frequency domain resources comprise all available uplink frequency domain resources; and
based on that the first frequency domain resource is a downlink frequency domain resource, the first sub-band information is unavailable sub-band information or available sub-band information, and the candidate frequency domain resources comprise all available downlink frequency domain resources.

20. A data transmission apparatus, **characterized by** comprising a processing circuitry, and a transmitting and receiving circuitry;
wherein the processing circuitry is configured to transmit first configuration information via the transmitting and receiving circuitry, wherein the first configuration information is used to configure candidate frequency domain resources; and
the processing circuitry is further configured to transmit data on a first frequency domain resource via the transmitting and receiving circuitry based on the first configuration information and first sub-band information;
wherein the first sub-band information indicates one or more sub-bands;
based on that the first frequency domain resource is an uplink frequency domain resource, the first sub-band information is available sub-band information, and the candidate frequency domain resources comprise all available uplink frequency domain resources; and
based on that the first frequency domain resource is a downlink frequency domain resource, the first sub-band information is unavailable sub-band information or available sub-band information, and the candidate frequency domain resources comprise all available downlink frequency domain resources.

21. A computer readable storage medium having computer instructions stored therein, **characterized in that** when the computer instructions are executed by a processor, the method of any one of claims 1 to 18 is performed.

22. A terminal device, comprising a memory and a processor, **characterized in that** the memory has computer instructions stored therein, and when the processor executes the computer instructions, the method of any one of claims 1 to 9 is performed.

23. A network device, comprising a memory and a processor, **characterized in that** the memory has computer instructions stored therein, and when the processor executes the computer instructions, the method of any one of claims 10 to 18 is performed.
